# EUROPEAN PATENT APPLICATION

(11) **EP 4 082 348 A1**
(43) Date of publication of application: **02.11.2022**
(21) Application number: 22382295.8
(22) Date of filing: 29.03.2022
(51) Int. Cl.: A22C 25/00

(54) **TOOL FOR PROCESSING CEPHALOPODS AND METHOD FOR PROCESSING CEPHALOPODS**

(30) Priority: 31.03.2021 ES 202130285
(71) Applicant: Azcue Ulacia, Pablo, 20808 Getaria (ES)
(72) Inventor: Azcue Ulacia, Pablo, 20808 Getaria (ES)
(74) Representative: Igartua, Ismael

(57) **Abstract**

The present invention relates to a tool for processing cephalopods, the tool comprising a first chamber (3) suitable for receiving a cephalopod and a second chamber (4) configured for being connected to suction means, preferably a vacuum pump, said first chamber (3) and said second chamber (4) being separated by a partition wall (6) and communicated by a plurality of openings (5) arranged in said partition wall (6), such that when the tool is in use and the suction means in operation and connected to the tool, the cephalopod is adhered to the surface (3') of the first chamber (3), completely opening the tapered shape of the cephalopod such that the inside of the cephalopod is fully accessible. The present invention also relates to a method for processing cephalopods.

## Description

### TECHNICAL FIELD

The present invention relates to methods and tools for processing cephalopods automatically.

### PRIOR ART

The processing and handling of cephalopods (such as squid, cuttlefish, or the like) has been performed manually as it is a slippery product. Nevertheless, there are machines today that are capable of internally and externally cleaning said cephalopods automatically.

In this sense, WO2007090920 A2 discloses an automatic machine for cleaning cephalopods comprising a plurality of work stations through which the cephalopod circulates in order to perform different cleaning operations on same. The machine described here comprises a scraper tool on which the cephalopod is placed, said cephalopod covering the scraper tool, to separate the head, tentacles, and guts of the animal, among others.

Document US2003224709 A1 discloses a rotary drum for removing internal organs from cephalopods. The cephalopods are placed in housings arranged on the periphery of the drum. As a result of suction means, the cephalopods are adhered to the corresponding housing while the drum rotates. Due to the centrifugal forces generated, the internal organs of the cephalopods are detached.

### DISCLOSURE OF THE INVENTION

The object of the invention is to provide a tool for processing cephalopods in which a cephalopod can be readily handled and a method for processing cephalopods, as defined in the claims.

A first aspect of the invention relates to a tool for processing cephalopods comprising a first chamber suitable for receiving a cephalopod and a second chamber configured for being connected to suction means, preferably a vacuum pump, said first chamber and said second chamber being separated by a partition wall and communicated by a plurality of openings arranged in said partition wall, such that when the tool is in use and the suction means in operation and connected to the tool of the invention, the cephalopod is adhered to the surface of the first chamber, completely opening the tapered shape of the cephalopod such that the inside of the cephalopod is fully accessible.

The tool of the invention, therefore, allows cephalopods to be handled in a simple and automatic manner, which favours the automation of other processes relating to cephalopods, besides cleaning.

In this sense, the method of the invention together with the tool of the invention allow processes such as the turning inside out of the cephalopods and/or the filling of the cephalopods to be automated.

A second aspect of the invention relates to a method for processing cephalopods comprising a transition phase carried out in the event that the cephalopod is not arranged in a tool for processing cephalopods according to the first aspect of the invention. In said transition phase, the cephalopod is transferred to a tool according to the first aspect of the invention in which an initial phase will be executed. In said initial phase, the cephalopod is adhered to the surface of the first chamber of the tool of the invention as it is suctioned by the suction means, completely opening the tapered shape of the cephalopod such that the inside of the cephalopod is fully accessible.

These and other advantages and features of the invention will become apparent in view of the figures and of the detailed description of the invention.

### DESCRIPTION OF THE DRAWINGS

Figure 1 shows a perspective view of a first embodiment of the tool for processing cephalopods according to the invention.
Figure 2 shows a section view of the tool of Figure 1.
Figure 3 is another section view of the tool of Figure 1, in which the cephalopod has been depicted inside the tool.
Figure 4 shows a perspective view of a second embodiment of the tool according to the invention.
Figure 5 shows a side view of the tool of Figure 4.
Figure 6 shows a section view according to section A-A of the tool of Figure 5.
Figure 7 shows another perspective view of the tool of Figure 4.
Figure 8 shows another perspective view of the tool of Figure 1 but with the pusher.
Figure 9A shows a sectioned side view of the tool of Figure 8.
Figure 9B shows another section view of the tool of Figure 9 but with the cephalopod inside.
Figure 10 shows a perspective view of a first embodiment of a machine for processing cephalopods comprising several tools according to the invention.
Figure 11 shows another perspective view of the machine of Figure 10 but without the protective barriers or doors.
Figure 12 shows a detail, according to a frontal view of the machine of Figure 10.
Figure 13 shows another detail, according to a side view of the machine of Figure 10.
Figure 14 shows a perspective view of a second embodiment of the machine for processing cephalopods.
Figure 15 shows a detail view of the lower part of the machine of Figure 14.
Figure 16 shows a detail, according to a front view of the machine of Figure 14.
Figure 17 shows a detail of the unloading station of the machine of Figure 11.
Figure 18 shows a detail of the closing station of the machine of Figure 11.

### DETAILED DISCLOSURE OF THE INVENTION

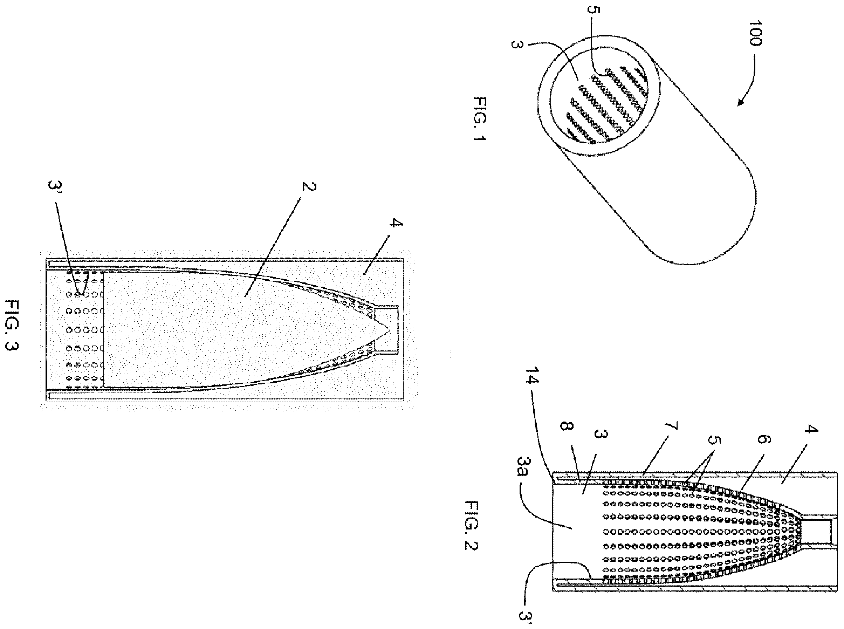

Figures 1 and 2 show a first embodiment of the tool 100 for processing cephalopods 2 of the invention, such as squid, cuttlefish, or the like, although the use thereof is not ruled out for another type of products similar to cephalopods but without belonging to their family, for example hollow edible products having a tapered shape the narrowest end of which is closed and the widest end of which is open, such as for example peppers prepared for being filled.

The tool 100 of the invention comprises a first chamber 3 suitable for receiving a cephalopod 2, as shown in Figure 3, and a second chamber 4 configured for being connected to suction means, preferably a vacuum pump, said first chamber 3 and said second chamber 4 being communicated by a plurality of openings 5, preferably having a circular or oval cross-section, such that when the tool 100 is in use and the suction means in operation and connected to the tool 100 of the invention, the cephalopod 2 is adhered to a surface 3' of the first chamber 3, completely opening the tapered shape of the cephalopod 2 such that the inside of the cephalopod 2 is accessible.

As shown in Figure 2, the first chamber 3 is arranged inside the second chamber 4, the inside of said first chamber 3 defining a housing 3a suitable for receiving the cephalopod 2, as shown in Figure 3. The housing 3a comprises a tapered shape, similar to the shape of the cephalopod 2, the narrowest side of the housing 3a being arranged close to the bottom of the tool 100, which is the end opposite a free end 14 of the tool where the cephalopod 2 is introduced in the tool 100.

The first chamber 3 and the second chamber 4 are separated by a partition wall 6, the plurality of openings 5 being arranged in said partition wall, as shown for example in Figure 2.

The second chamber 4 comprises a outer wall 7, preferably tubular, the partition wall 6 in the preferred embodiment of the invention being a prolongation of said outer wall 7. As shown in Figure 2, the outer wall 7 is bent towards the interior of the second chamber 4 at the free end 14 of the tool 100, said partition wall 6 and the first chamber 3 being formed.

As shown in Figure 2, the plurality of openings 5 are uniformly distributed along the partition wall 6, the suction surface to be obtained depending on the number and on the size of the cross-section of said openings 5. A smaller inlet section size of the openings 5, but with an increased density thereof to maintain the suction surface, is preferable. The number of openings 5 not covered by the cephalopod 2 is thereby minimised, and, therefore, the absorption efficacy of the suction means is increased.

Likewise, so that the tool 100 according to the preferred embodiment of the invention can be adapted to different sizes of cephalopods 2, the plurality of openings 5 extends from the bottom of the first chamber 3 to approximately three fourths the height of the tool 100, the majority of the openings 5 thereby being covered by the cephalopod 2 regardless of the size thereof. Therefore, with smaller sized cephalopods 2, although the majority of the openings 5 are covered, there may openings 5 left uncovered, but as a result of the distribution of the openings 5 the loss of suction is minimised since there will be a minimum of openings 5 left uncovered. In contrast, even with larger sized cephalopods 2 which cover all the openings 5, there may be an area, preferably the area having the largest cross-section, that is not suctioned through the openings 5, so said area is not attracted to the surface 3' of the first chamber 3. However, with the distribution of the openings 5 said non-suctioned area is minimised, thereby ensuring the correct gripping of the cephalopod 2 in the tool 100 of the invention.

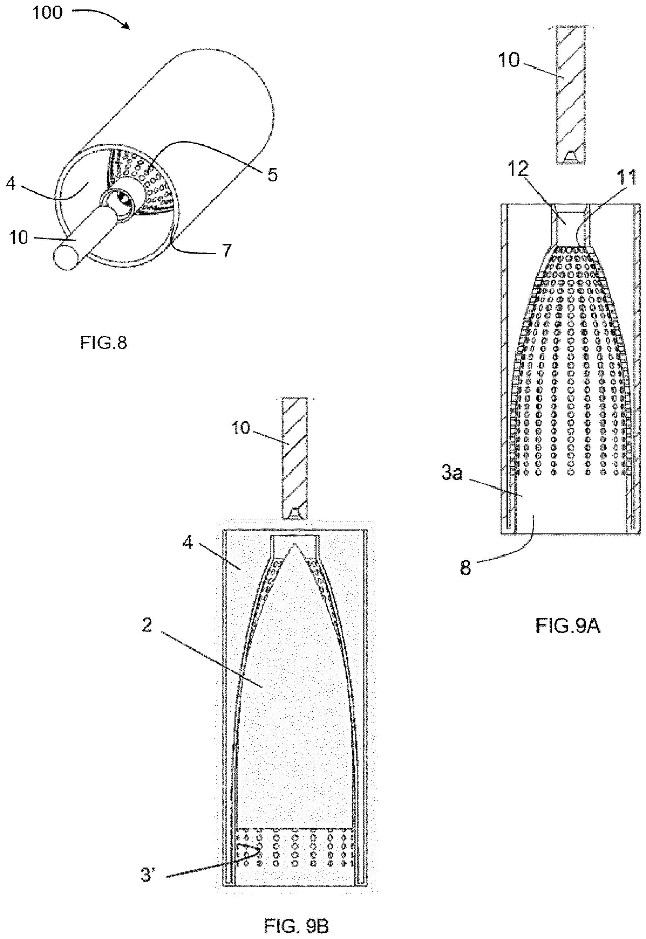

In the preferred embodiment of the invention, the first chamber 3 comprises a through hole 11 arranged in the bottom of said first chamber 3, although said bottom may also not comprise said through hole 11. The through hole 11 is configured for allowing the passage of a pusher 10 acting from the outer bottom of the tool 100 into the first chamber 3, as shown for example in Figures 8 and 9A. This pusher 10, comprised in the tool 100 of the invention, is configured for pushing the cephalopod 2 arranged inside the first chamber 3 by the narrowest side thereof, as depicted in Figure 9B, favouring the turning inside out of the cephalopod 2. In other words, the tool 100 of the invention, together with the pusher 100, allow the cephalopod 2 to be turned inside out in a simple and rapid manner, as will be described in detail below, preventing the risk of tearing the cephalopod 2 during the turning inside out process since this process simulates the process that has traditionally been performed manually, in which the cephalopod 2 is pushed with the thumb of one hand while holding the cephalopod 2 with the other hand.

In the preferred embodiment of the invention, the through hole 11 collaborates with a guide channel 12 extending from said through hole 11 to the bottom of the tool 100 such that said guide channel 12 allows the first chamber 3 and the second chamber 4 to be kept separated and acts as a guide for the pusher 10.

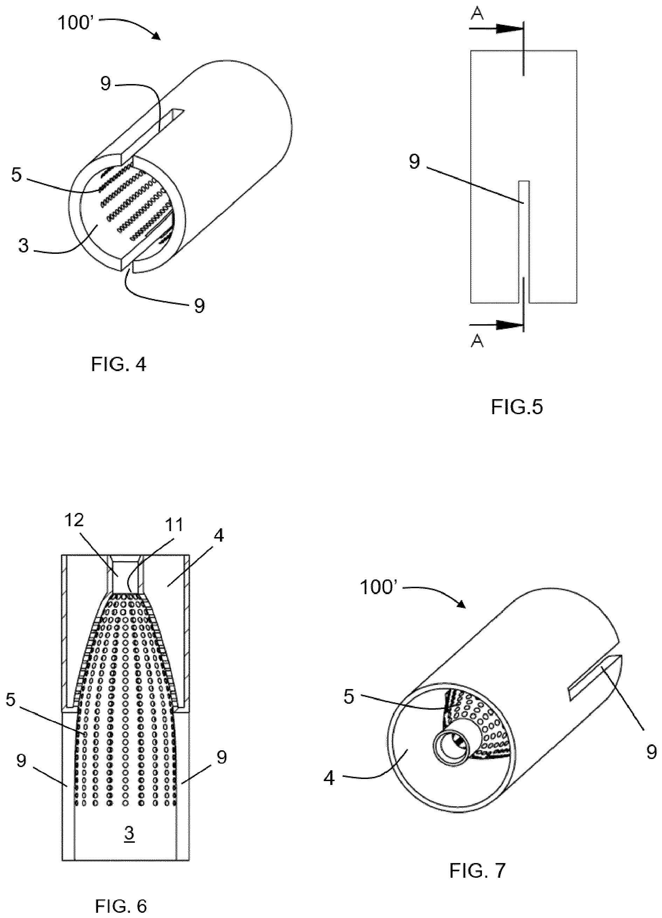

In a second embodiment of the invention shown in Figures 4 to 7, the tool 100' comprises all the features of the tool 100 of the first embodiment, where the pusher 10 is not necessary, and it further comprises at least two longitudinal openings 9 which are arranged facing one another, both openings 9 extending from the free end 14 of the tool 100' to the centre of the tool 100', and preferably being configured in the form of a slot or groove, as shown in Figure 5. These openings 9 are advantageous since they will allow the removal of the cephalopod 2 from the tool 100', as will be described in detail below.

As shown in Figure 5, each longitudinal opening 9 extends to approximately half of the tool 100', although the length of the openings 9, and also the width of the groove, will depend on removal means 222 which will be used to remove the cephalopod 2.

In order to facilitate managing the manufacture of tools for processing cephalopods 2, the tool 100' of the second embodiment may also comprise the through hole 11 and the guide channel 12 which facilitate the turning inside out of the cephalopod 2, although said through hole 11 and the guide channel 12 are not necessary if the cephalopod 2 is not turned inside out.

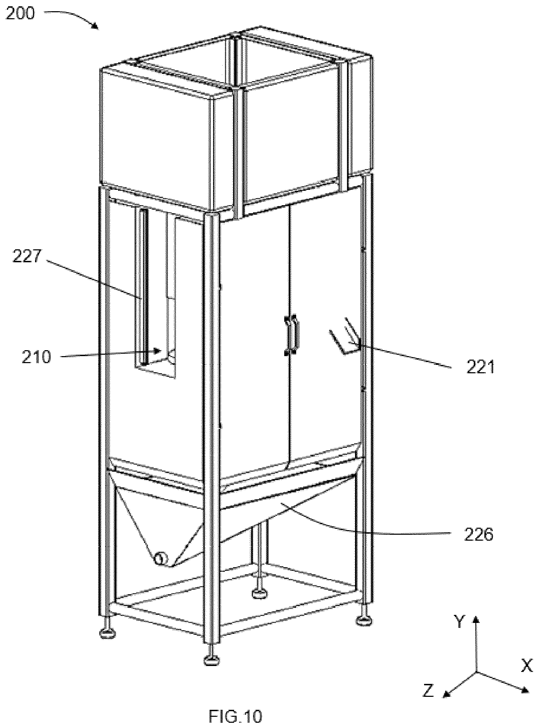

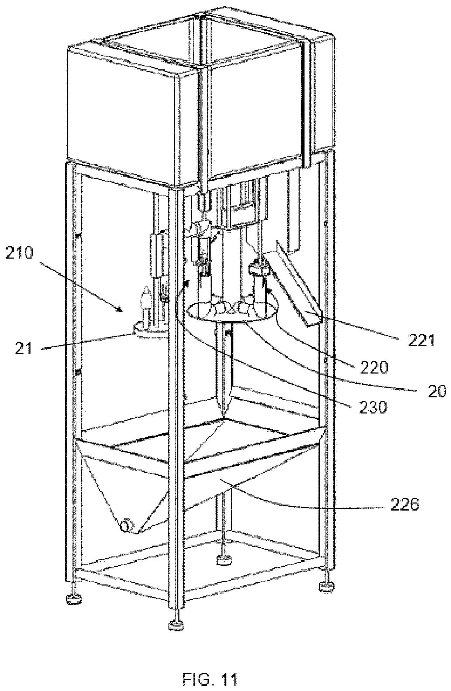

Figure 10 shows a machine 200 for processing cephalopods 2 according to a first embodiment. Figure 11 also shows said machine 200, but in said figure the doors and sides of the machine have been eliminated to better understand the machine 200.

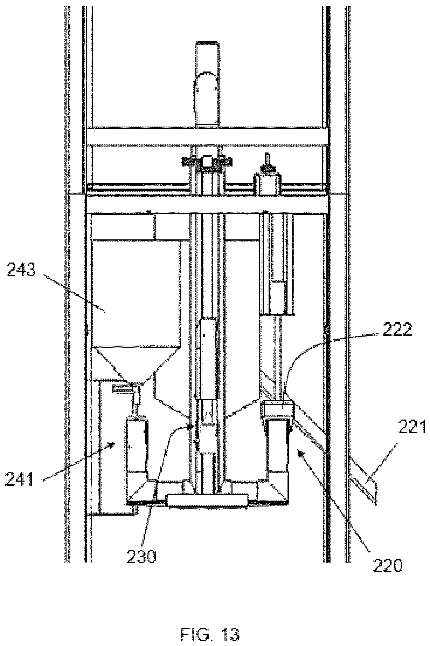

The machine 200 comprises a plurality of work stations, as observed in Figures 11, 12, and 13, at least one of said work stations comprising a work tool 100 or 100' according to any of the described embodiments. The tools according to the invention used in the machine 200 of the invention shall be referred to as work tools in order to distinguish them from the rest of the tools of the machine 200 that are not part of the invention.

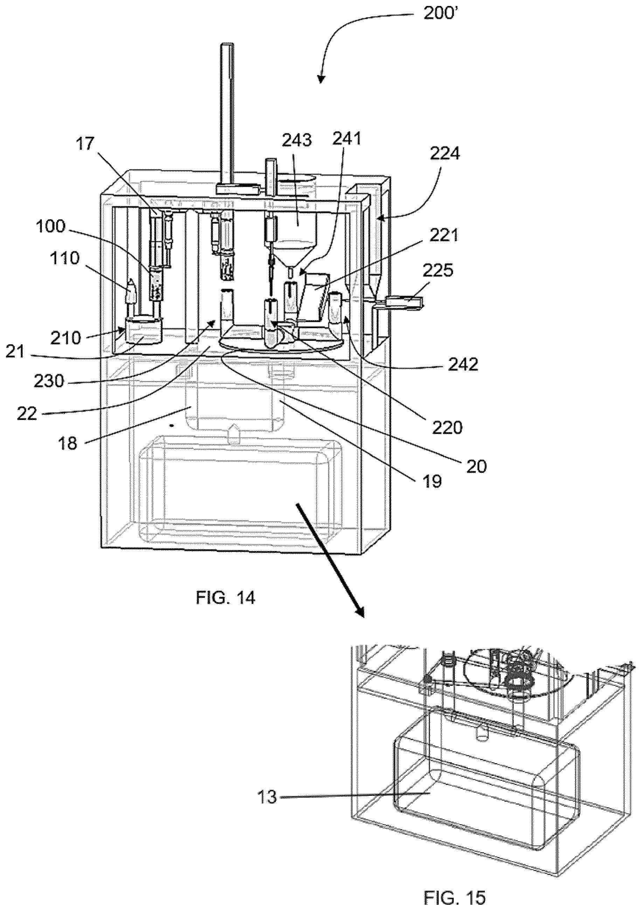

The machine 200 cooperates with suction means, preferably a vacuum pump, which may or may not be part of the machine 200. The machine 200 can incorporate a vacuum pump 13, as shown in the embodiment of Figures 14 and 15, or it can be connected to a vacuum pump or auxiliary compressor common to the rest of the installations in the building, not shown in the drawings, in which the machine 200 is located.

Included among the work stations, there are a loading station 210, an unloading station 220, and at least one of the following stations: a turning inside out station 230 and a complementary station comprising a filling station 241 and a closing station 242, with all the work stations except the loading station 210 comprising at least one work tool 100 or 100' according to any of the described embodiments. The closing station 242 is located upstream of the filling station 241.

In the preferred embodiment, the machine 200 comprises both the turning inside out station 230 as well as the filling station 241 and the closing station 242, and that is how said machine 200 will be described throughout the description. Nevertheless, depending on the end product to be obtained (clean and turned inside out cephalopod and/or filled cephalopod), the machine 200 may dispense with the corresponding work station or may simply switch off the corresponding work station.

Optionally, the machine 200 of the invention can be coupled to a machine for cleaning cephalopods 2, such as the one described in WO2007090920 A2 and incorporated herein by reference, such that the machine 200 of the invention may automatically offer continuity to subsequent production processes of the cephalopod 2, such as for example turning cephalopod 2 inside out and/or filling the inside of a cephalopod 2, as described below. Therefore, the loading station 210 of the machine 200 may be an automatic station in which the end part of a machine for cleaning cephalopods 2 will be converted into the loading station 110 of the machine 200, or it may be a manual station in which the cephalopod 2 to be processed will be loaded in a loading tool 110 that is not part of the invention. The user will place a clean cephalopod 2, i.e., free of the head, tentacles, and guts, in said loading tool 110 to perform the rest of the operations automatically. If the cephalopod 2 is not to be turned inside out, said cephalopod 2 may be loaded directly in a work tool 100' according to the second embodiment of the tool described, for example to fill the cephalopod 2. This operation may also be of interest for automating the process of filling other products, such as peppers, for example.

In the preferred embodiment, the machine 200 comprises a manual loading station 210 in which the operator arranges the cephalopod 2 in a loading tool 110, the cephalopod 2 covering said loading tool 110 such that the outside of the cephalopod 2 is completely accessible, i.e., the loading tool 110 is arranged inside the cephalopod 2. The loading tool 110 can be similar to the scraper tool described in WO2007090920 A2, where it is not necessary for the loading tool 110 of the machine 200 to comprise scraper elements eliminating parts of the cephalopod 2.

The machine 200 and the process for processing cephalopods 2 of the invention will be described below taking into account that a turning inside out step and a filling and closing step will be performed on the cephalopod 2. The turning inside out step will be carried out in the turning inside out station 230 and the filling and closing step will be carried out in the filling station 241 and the closing station 242, successively.

In the preferred embodiment, the turning inside out station 230 is arranged upstream of the loading station 210, the filling station 241 upstream of the turning inside out station 230, the closing station 242 upstream of the filling station 241, and the unloading station 220 upstream of the closing station 242, as shown in Figures 10 to 13.

In the turning inside out step, the cephalopod 2 is inverted, i.e., the outside of the cephalopod 2 becomes the inside of the cephalopod 2. In the filling and closing step, the inside of the cephalopod 2 is filled with a variety of food products, such as for example the tentacles removed in the cleaning phase which may or may not be mixed with other products, and subsequently the widest side of the cephalopod 2 is fixed with fixing means 15, preferably a toothpick, for containing food products deposited therein, thereby preventing the filled food products from being able to spill out once the cephalopod 2 leaves the corresponding tool 100'.

If the cephalopod 2 is arranged in the loading tool 110 in the loading station 210, the machine 200 will execute a transition phase in which the cephalopod 2 is transferred from the loading tool 110 to a tool 100 or 100' of the invention. Since in the machine 200 of the preferred embodiment the first step that will be carried out is the turning inside out step, the tool to which the cephalopod 2 will be transferred will be tool 100 of the described preferred embodiment, hereinafter referred to as first work tool 100 to better understand the method of the invention.

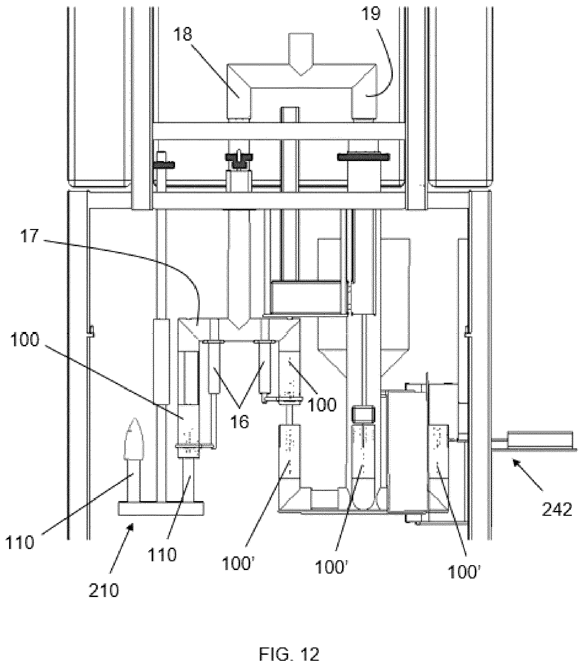

In the preferred embodiment of the invention, the first work tool 100 cooperates with the loading tool 110 of the loading station 210 and with a second tool 100', according to the second embodiment of the described tool, of the turning inside out station 230 which will receive the cephalopod 2 turned inside out, as described below, and which has been referred to as second work tool 100' to better understand the method of the invention. As shown in the figures, for example in Figures 12 and 14, the first work tool 100 and the second work tool 100' are arranged such that the first chambers 3 of both tools 100 and 100' are facing one another, the first work tool 100 being arranged facing downwards.

Both in the first work tool 100 and in the second work tool 100', or in any other tool 100 or 100' of the invention, an initial phase will be executed for the cephalopod 2 arranged inside the corresponding tool 100 or 100' to be attracted and adhered to the surface 3' of the first chamber 3.

The initial phase comprises the following operations:
- starting up the suction means and/or connection of the work tool 100 or 100' corresponding to the suction means which are connected to the second chamber 4 of said work tool 100 or 100', and
- a suction operation in which the cephalopod 2 is suctioned by said work tool 100 or 100' through the plurality of openings 5 such that the cephalopod 2 remains adhered to the surface 3' of the first chamber 3 of said tool 100 or 100' while the suction means are in operation and while said tool 100 or 100' is connected to the suction means.

After the suction operation, the cephalopod 2 is fully open and stuck to the tapered wall, formed by the surface 3', of the first chamber 3 of the work tool 100 or 100'.

Moreover, the transition phase comprises the following operations which are executed sequentially:
- vertically aligning the loading tool 110 of the loading station 210, according to direction Y of the machine 200, with the first work tool 100, said first work tool 100 being arranged in a more distant vertical position and such that the first chamber 3 of the first work tool 100 is facing the loading tool 110,
- bringing the first work tool 100 and the loading tool 110 closer such that the first work tool 100 covers and surrounds at least part of the outside of the cephalopod 2 which is mounted on the loading tool 110,
- executing the initial phase in the first work tool 100 such that the cephalopod 2 is attracted by the first work tool 100 and, therefore, transferred to same, the cephalopod 2 being adhered to the surface 3' of the first chamber 3 of the first work tool 100, and
- moving the first work tool 100 and the loading tool 110 away.

The turning inside out step of the method for processing cephalopods 2 of the invention comprises the transition phase described above and a turning inside out phase comprising the following operations which are executed sequentially:
- vertically aligning the first work tool 100 with the second work tool 100', such that the first chamber 3 of both work tools 100 and 100' are facing one another and aligned, maintaining a minimum separation between both work tools 100 and 100' which prevents the tools 100 and 100' from colliding,
- a pushing operation in which the pusher 10 of the first work tool 100 acting from the bottom of said work tool 100 and moving forward towards the second work tool 100' pushes the cephalopod 2 by the narrowest side thereof, forcing the tip of the cephalopod 2 to traverse the inside of the cephalopod 2 on the inside thereof, the cephalopod 2 being detached from the surface 3' of the first chamber 3 of the first work tool 100 as the pusher 10 moves forward, and
- a, ejection operation in which in the final phase of the pushing operation, the cephalopod 2 is transferred from the first work tool 100 to the second work tool 100' such that said second work tool 100' collects the cephalopod 2 that is arranged inside out on the second work tool 100'.

Optionally, after the vertical alignment in the turning inside out phase, an operation of bringing the first work tool 100 and the second work tool 100' closer may be included if needed.

Likewise, the turning inside out step comprises a positioning phase carried out between the transition phase and the turning inside out phase and/or at the end of the turning inside out phase in which the first work tool 100 is horizontally moved so that it can interact with the loading tool 110 and with the second work tool 100'.

In the preferred embodiment of the invention, the first work tool 100 is arranged on a turning inside out structure 17 with the possibility of rotation, shown in greater detail in Figure 12, preferably hanging from the ceiling of the machine 200 and preferably having an inverted U shape, enabling the horizontal movement of the first work tool 100 according to direction X shown in Figure 10, which coincides with the direction defining the width of the machine 200. Said turning inside out structure 17 comprises two work positions, a first position in which the corresponding work tool 100 collaborates with the loading tool 110 of the loading station 210, and a second position in which said first work tool 100 collaborates with the second work tool 100' of the turning inside out station 230. A first respective work tool 100 is arranged at each end of the turning inside out structure 17 to increase the cycle time of the machine 200, said first work tools 100 being arranged facing downwards.

Being the turning inside out structure 17 in the first position, when the cephalopod 2 is transferred from the loading tool 110 to the first work tool 100 in the transition phase, the turning inside out structure 17 transitions to the second position, with cooperation being enabled between the first work tool 100 carrying the cephalopod 2 and the second work tool 100' to which the cephalopod 2 will be transferred turned inside out in the turning inside out step.

The loading station 210 also comprises two loading tools 110 to increase the cycle time of the machine 200. These two loading tools 110 can be arranged on a rotary platform or carousel 21, as shown in Figures 11 and 12 for example, which hangs from the ceiling of the machine 200 with the possibility of rotation in the preferred embodiment of the invention. Therefore, while the user is loading a new cephalopod 2 in the first loading tool 110 of the loading station 210, another cephalopod 2 is simultaneously being transferred from the second loading tool 110 to one of the first work tools 100, and another cephalopod 2, but this one inside out, is also simultaneously being transferred from the other first work tool 100 to the second work tool 100' of the turning inside out station 230, all the movements of all the work stations of the machine 200 being synchronised.

Optionally, in a variant that is not shown in the figures, the turning inside out structure 17 can be a movable structure moving between the loading station 210 and the turning inside out station 230 with translational movements.

Moreover, in the preferred embodiment of the invention, each first work tool 100 cooperates with a respective linear actuator 16 enabling the corresponding first work tool 100 to move axially, such that with the first work tool 100 mounted in the machine 200 of the invention said first work tool 100 can be moved vertically according to direction Y shown in Figure 10, coinciding with the direction defining the height of the machine 200, enabling the first work tool 100 and the second work tool 100' or the loading tool 110 to be brought closer or moved away. Each linear actuator 16 comprises a forward movement position enabling the corresponding first work tool 100 to be brought closer and cover the respective loading tool 110, and a backward movement position in which a minimum separation between the corresponding first work tool 100 and the respective second work tool 100' or the respective loading tool 110 is assured.

In a variant of the invention that is not shown in the drawings, the first work tool 100 may be telescopic so that it can be extended or contracted axially, causing the same vertical movement as in the previous case.

Figure 12 depicts an instant of the machine 200 in which the first work tool 100 which is cooperating with the loading station 210 is moved vertically, actuated by the corresponding linear actuator 16, which is in the forward movement position, such that said first work tool 100 covers the cephalopod 2 arranged in the respective loading tool 110 to be suctioned by said first work tool 100, whereas in parallel, in the turning inside out station 230, with the corresponding linear actuator 16 in the retracted position, the pusher 10 of the corresponding first work tool 100 has already reached the end of its stroke, the corresponding cephalopod 2, turned inside out, having been deposited in the second work tool 100' of the turning inside out station 230.

In the preferred embodiment, the machine 200 comprises a first conduit 18 connecting the suction means with the first work tools 100 and a second conduit 19 connecting the suction means with the seconds work tools 100', as shown in Figure 12. Each conduit 18 and 19 comprises at least one valve (not shown in the drawings) which allows or blocks the connection of the corresponding work tool 100 or 100' to the suction means, such that during the ejection operation of the turning inside out phase, the first work tool 100 can be disconnected from the suction means and the second work tool 100' is connected to the suction means, the initial phase being executed in the second work tool 100'.

After the turning inside out step, if the inside of the cephalopod 2 is not to be filled, the filling and closing step is not executed, and the cephalopod 2 turned inside out is removed from the corresponding second work tool 100' when it reaches the unloading station 220 for packaging.

The unloading station 220 comprises removal means 222 comprising two movable grippers 223 arranged at opposite ends such that said grippers 223 can be moved closer to or farther away from one another. During the removal phase for removing the cephalopod 2, the second work tool 100' arranged in the unloading station 220 is disconnected from the suction means to facilitate the removal of the cephalopod 2. The removal means 220 are brought closer to the corresponding second work tool 100' such that each grip 223 is arranged aligned with a respective longitudinal opening 9 of the second work tool 100'. Then, the grippers 223 of the removal means 222 are moved to be brought closer to one another, the cephalopod 2 being trapped between both grippers 223. Lastly, the removal means 222 transport the cephalopod 2 to an output ramp 221 so that the cephalopod 2 can be packaged.

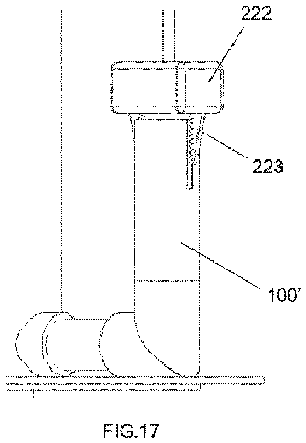

To favour gripping of the cephalopod 2, the grippers 223 of the removal means 222 may comprise a plurality of protrusions, for example in the form of a saw, on the contact face with the cephalopod 2, as shown in Figure 17.

If after the turning inside out step the inside of the cephalopod 2 is to be filled, the filling and closing step comprising a filling phase and closing phase is executed. The filling phase comprises the following operations which are executed sequentially:
- executing the initial phase in the second work tool 100' such that the cephalopod 2 is fully open and, therefore, the inside of the cephalopod 2 is completely accessible, and
- introducing the desired foods inside the cephalopod 2.

In contrast, if only the filling of the cephalopod 2 is to be performed, either because the cephalopod 2 is already clean and turned inside out or for whatever reason, the turning inside out step will be dispensed with.

The closing phase of the filling and closing step comprises an operation in which fixing means 15, preferably a toothpick, traverse the cephalopod 2 from side to side at the widest end thereof for containing food products deposited therein, said fixing means 15 being introduced through one of the longitudinal openings 9 of the corresponding second work tool 100' until a segment of said fixing means 15 emerges through the other longitudinal opening 9.

Before the closing phase, disconnecting the suction means from the corresponding second work tool 100' is recommended for the second work tool 100' to stop suctioning the cephalopod 2.

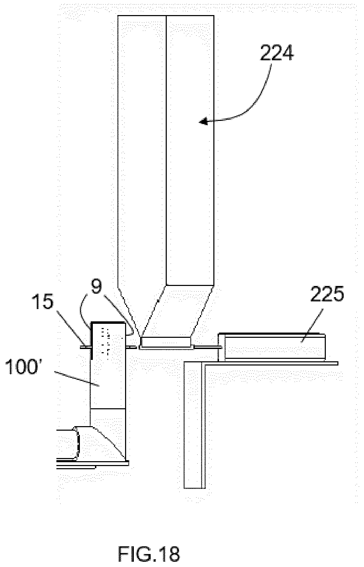

In the preferred embodiment, the fixing means 15 are stored in a receptacle or tank 224 of the machine 200 such that a toothpick emerges at the lower part of the tank 224, as shown in Figure 18. The two longitudinal openings 9 of the second work tool 100' arranged in the closing station 242 are aligned with the toothpick emerging at the lower part of the receptacle 224 and with a linear actuator 225 of the closing station 242. When said linear actuator 225 transitions to a forward movement position, it pushes the toothpick emerging at the lower part of the receptacle 224 until each end of the toothpick surfaces through a respective longitudinal opening 9 of the corresponding second work tool 100', traversing the cephalopod 2 on its path.

The foods for filling can be stored in a silo or receptacle 243 cooperating with the second work tool 100' of the filling station 241 to meter the amount to be filled automatically. The filling can be made up of a mixture of several food products. In one variant of the invention, not shown in the invention, each food product can be stored in a respective receptacle, with the mixing taking place inside the cephalopod 2. In another variant of the invention, instead of the storage and metering receptacle, a conveyor belt or the like could be used to transport the filling to the cephalopod 2.

After the closing phase, the second work tool 100' transitions to the unloading station 220 described above. The only variation in the removal of the cephalopod 2 with filling is that the removal means 222 anchor the cephalopod 2 by the fixing means 15, i.e., the grippers 223 of the removal means 222 trap the fixing means 15 to lead the cephalopod 2 to the outlet ramp 221 so that the cephalopod 2 can be packaged.

In the preferred embodiment, the work tools of the filling station 241, of the closing station 242, of the unloading station 220, and the tool that collects the cephalopod 2 turned inside out in the turning inside out station 230 are second work tools 100', i.e., tools 100' according to the second embodiment of the described tools, all these seconds work tools 100' being arranged in a rotating platform 20, as can be seen in Figure 11, such that when the rotating platform 20 rotates, a respective second work tool 100' transitions from one work station to another.

In the preferred embodiment shown in Figures 10 to 13, the rotating platform 20 supporting the turning inside out station 230, filling station 241, closing station 242, and unloading station 220, the rotating platform 21 supporting the loading station 210, as well as the turning inside out structure 17 are fixed to the upper part of the machine 200, with the possibility of rotation, such that they are suspended. A tapered or rectangular pyramid-shaped container 226 is arranged in the lower part of the machine 200 to collect the waste formed during the processing of the cephalopods 2.

If the machine 200 has suction means integrated therein, they would be arranged in the high part of the machine 200.

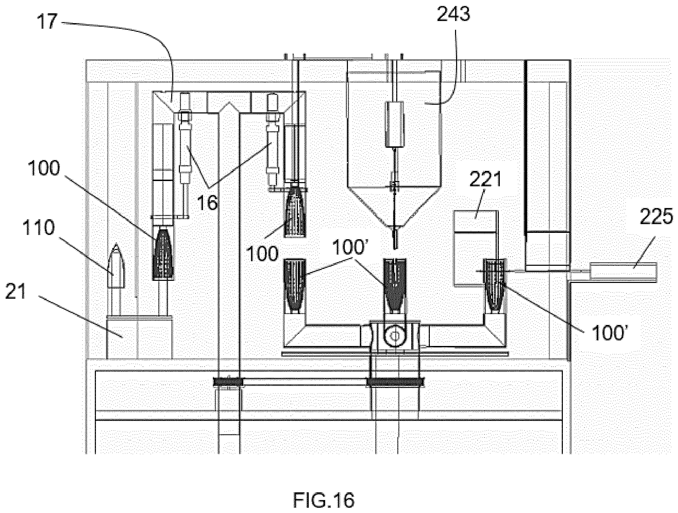

Figures 14 to 16 show a second embodiment of the machine 200', with this embodiment being distinguished from the first embodiment of the machine 200 only in the arrangement of some components. In the machine 200' of the second embodiment, the rotating platform 20 supporting the second work tools 100' of the turning inside out station 230, filling station 241, closing station 242, and unloading station 220, and the rotating platform 21 supporting the loading station 210 are fixed to a base 22 of the machine 200', with the possibility of rotation, as shown in Figure 14. Likewise, this second embodiment has suction means 13 integrated in the machine 200', and they are arranged in the lower part of the machine 200', as shown in more detail in Figure 15, although it is also possible to connect the machine 200' to auxiliary suction means such as in the case of the machine 200 of the first embodiment.

According to any of the described embodiments, the machine may likewise incorporate all the safety elements needed to assure the proper operation of the machine, as well as photoelectric barriers 227 of the loading station 210 shown in Figure 10.

## Claims

1. Tool for processing cephalopods (2), comprising a first chamber (3) suitable for receiving a cephalopod (2) and a second chamber (4) configured for being connected to suction means (13), preferably a vacuum pump, said first chamber (3) and said second chamber (4) being communicated by a plurality of openings (5), such that when the tool (100; 100') is in use and the suction means (13) in operation and connected to the tool (100; 100'), the cephalopod (2) is adhered to the surface (3') of the first chamber (3), **characterised in that** the first chamber (3) and the second chamber (4) are separated by a partition wall (6), the plurality of openings (5) being arranged in said partition wall (6).

2. Tool according to claim 1, wherein the inside of the first chamber (3) defines a housing (3a) suitable for receiving the cephalopod (2), said housing (3a) being tapered and the narrowest side of the housing (3a) being arranged close to the bottom of the tool (100; 100').

3. Tool according to claim 1 or 2, wherein the first chamber (3) is arranged inside the second chamber (4), the partition wall (6) preferably being a prolongation of an outer wall (7) of the second chamber (4) which is bent towards the interior of the second chamber (4) forming said partition wall (6), said outer wall (7) preferably being tubular.

4. Tool according to any of the preceding claims, wherein the plurality of openings (5) are uniformly distributed along the partition wall (6), each opening (5) preferably comprising a circular or oval cross-section.

5. Tool according to any of the preceding claims, wherein the tool (100') comprises at least two longitudinal openings (9), preferably in the form of a slot or groove, which are arranged facing one another, both openings (9) extending from the free end (14) of the tool (100'), preferably at most to half of the tool (100').

6. Tool according to any of the preceding claims, wherein the first chamber (3) comprises a through hole (11) arranged in the bottom of said first chamber (3), said through hole (11) being configured for allowing the passage of a pusher (10) into the first chamber (3) from the bottom of the tool (100), said pusher (10) being configured for pushing the cephalopod (2) arranged inside the first chamber (3) by the narrowest side thereof.

7. Tool according to claim 6, wherein said through hole (11) collaborates with a guide channel (12) extending from said through hole (11) to the bottom of the tool (100) such that said guide channel (12) allows to be kept separated the first chamber (3) and the second chamber (4).

8. Method for processing cephalopods (2), comprising a loading step in which the cephalopod (2) to be processed is arranged in a loading tool (110) in which the outside of the cephalopod (2) is completely accessible or in a work tool (100;100') according to any of the preceding claims, **characterised in that** the method comprises a transition phase carried out in the event that the cephalopod (2) is arranged in the loading tool (110), in which the cephalopod (2) is transferred from the loading tool (110) to a work tool (100; 100') according to any of the preceding claims, and an initial phase executed in the work tool (100; 100'), said initial phase comprising the following operations:
- the start-up of the suction means (13) and/or connection of the work tool (100; 100') to the suction means (13) which are connected to the second chamber (4) of said tool (100; 100'), and
- a suction operation in which the cephalopod (2) is suctioned by said tool (100; 100') through the plurality of openings (5) such that the cephalopod (2) remains adhered to the surface (3') of the first chamber (3) of said tool (100; 100') while the suction means (13) are in operation and while said tool (100; 100') is connected to the suction means (13).

9. Method according to claim 8, wherein the method may comprise a prior cleaning step for cleaning cephalopods (2) in which the inside and outside of the cephalopod (2) are cleaned, where the loading tool (110) may be a manual loading tool or a tool from the end of the cleaning step, the method also comprising at least one of the following steps:
- a turning inside out step in which the cephalopod (2) is inverted, i.e., the outside of the cephalopod (2) becomes the inside of the cephalopod (2), or
- a filling and closing step in which the inside of the cephalopod (2) is filled with a variety of food products, and the widest side of the cephalopod (2) is subsequently fixed with fixing means (15) for containing food products deposited therein,
the initial phase being executed in both steps.

10. Method according to claim 9, wherein the turning inside out step comprises the transition phase and a turning inside out phase, the transition phase comprising the following operations which are executed sequentially:
- vertically aligning the loading tool (110) with a first work tool (100) according to claims 12 or 13, said first work tool (100) being arranged in a more distant vertical position and such that the first chamber (3) is facing and aligned with the loading tool (110),
- bringing the first work tool (100) and the loading tool (110) closer such that the first work tool (100) surrounds the outside of the cephalopod (2) which is mounted on the loading tool (110),
- executing the initial phase in the first work tool (100) such that the cephalopod (2) is attracted by the first work tool (100) and, therefore, transferred to same, and
- moving the first work tool (100) and the loading tool (110) away,
and the turning inside out phase comprising the following operations which are executed sequentially:
- vertically aligning the first work tool (100) with a second work tool (100') according to claims 9 to 11, such that the first chambers (3) of both work tools (100; 100') are facing one another,
- a pushing operation in which a pusher (10) acting from the bottom of the first work tool (100) and moving forward towards the second work tool (100') pushes the cephalopod (2) by the narrowest side thereof, forcing the tip of the cephalopod (2) to traverse the inside of the cephalopod (2), the cephalopod (2) being detached from the surface (3') of the first chamber (3) of the first work tool (100) as the pusher (10) moves forward, and
- an ejection operation in which in the final phase of the pushing operation, the cephalopod (2) is transferred from the first work tool (100) to the second work tool (100') such that said second work tool (100') collects the cephalopod (2) that is arranged inside out on the second work tool (100'),
the turning inside out step comprising a positioning phase carried out between the transition phase and the turning inside out phase and/or at the end of the turning inside out phase in which the first work tool (100) is moved so that it can interact with the loading tool (110) and with the second work tool (100').

11. Method according to claim 10, wherein the first work tool (100) is vertically and horizontally movable.

12. Method according to claim 10 or 11, wherein a first conduit (18) of the suction means (13) is connected to the first work tool (100) and a second conduit (19) of the suction means (13) is connected to the second work tool (100'), each conduit (18, 19) comprising at least one valve which allows or blocks the connection of the corresponding work tool (100; 100') to the suction means (13), such that during the ejection operation of the turning inside out phase, the first work tool (100) is disconnected from the suction means (13) and the second work tool (100') is connected to the suction means (13), the initial phase being executed in the second work tool (100').

13. Method according to claim 12, wherein the second work tool (100') is disconnected from the suction means (13) and the cephalopod (2), which is arranged inside out, is removed from the second work tool (100') for packaging.

14. Method according to claim 9 or according to claim 12, wherein the filling and closing step comprises a filling phase and a closing phase, the cephalopod (2) in the filling phase being arranged in the second work tool (100') when the method depends on claim 12, or in a second work tool (100') according to claim 5 when the method depends on claim 9, the filling phase comprising the following operations which are executed sequentially:
- executing the initial phase in the second work tool (100') such that the cephalopod (2) is fully open,
- introducing the desired foods inside the cephalopod (2), and
- disconnecting the second work tool (100') from the suction means (13) such that the second work tool (100') stops suctioning the cephalopod (2),
and the closing phase comprising an operation in which the fixing means (15), preferably a toothpick, traverse the cephalopod (2) from side to side at the widest end thereof for containing food products deposited therein, introducing said fixing means (15) through one of the longitudinal openings (9) of the second work tool (100') until a segment of said fixing means (15) emerges through the other longitudinal opening (9).

15. Method according to claim 14, wherein the cephalopod (2) is removed from the second work tool (100') for packaging, preferably anchored by the fixing means (15).
